# EUROPEAN PATENT SPECIFICATION

(11) **EP 3 479 882 B1**
(45) Date of publication and mention of the grant of the patent: **26.08.2020**
(21) Application number: 18176565.2
(22) Date of filing: 07.06.2018
(51) Int. Cl.: A63F 13/26, A63F 13/537, A63F 13/90

(54) **DISPLAY DEVICE**
ANZEIGEVORRICHTUNG
AFFICHEUR

(30) Priority: 02.11.2017 TW 106216254 U
(43) Date of publication of application: 08.05.2019
(73) Proprietor: Micro-Star International Co., Ltd., 235, New Taipei City (TW)
(72) Inventor: Yeh, Chun-Te, 106 Taipei City (TW); Liu, Chia-Fu, 241 New Taipei City (TW); Chen, Chung-Wen, 112 Taipei City (TW)
(74) Representative: 2K Patentanwälte Blasberg Kewitz & Reichel

(56) References cited:
- EP-A1- 0 901 062
- EP-A1- 2 846 539
- EP-A1- 3 168 625
- KR-A- 20100 112 953
- US-A1- 2011 018 849
- US-A1- 2011 051 019
- US-A1- 2015 154 836
- US-A1- 2015 195 887
- US-A1- 2017 154 607
- US-A1- 2017 208 287

## Description

### BACKGROUND OF THE INVENTION

### 1. Field of the Invention

The invention relates to a device, and particularly relates to a display device having a status display function.

### 2. Description of Related Art

The development of display devices is now quite matured. In particular, display devices having a high display quality are applicable for specific purposes, such as graphic designs or video gaming, to provide high quality display frames. However, known display devices for video gaming only offer extra functions such as speakers, but do not provide a specific function linkable with the gaming program. Thus, when a gaming frame displays a greater amount of information, it is more difficult for the user to notice all the information. Particularly, due to rapid changes in gaming frames, it is easy for the user to omit important information in the frames. Therefore, how to link the display device to a specific application program, in particular a gaming program, to allow the user to notice the important information in gaming contents by different means and thereby facilitate the gaming experience of the user is now an issue to work on.

US 2017/154607 A1 discloses a display apparatus and a controlling method thereof. The display apparatus may include: a display panel that displays a screen; a light source disposed at one side of the display panel; an audio input that receives an audio signal; and a processor that flickers the light source in response to the received audio signal.

EP 2 846 539 A1 discloses a display device which includes a display being configured to display a user interface (UI) screen, a status display which includes a plurality of light emitting elements being arranged on an outline region of the display, and a controller configured to control a light emitting status of the plurality of light emitting elements so as to provide a light interaction in which the plurality of light emitting elements operate in a preset display pattern based on an interaction occurring on the UI screen.

EP 3 168 625 A1 discloses a vehicle lighting system for providing decorative lighting effects. The vehicle lighting system comprises several LEDs with different spectral output, a processor being configured to control the several LEDs with different spectral output independently so as to achieve color mixing, wherein the processor is associated with a user interface for selecting a program from a memory capable of storing programs for controlling the several LEDs with different spectral output,

### SUMMARY OF THE INVENTION

The invention is defined in the appended claims. One or some exemplary embodiments provide display device capable of providing a status display function (or status indicator function). The display device according to one or some exemplary embodiments of the invention may communicate with an external computer device to render lighting effects for different statuses in correspondence with a specific application / gaming program of the external computer device.

A display device according to an embodiment includes a status display module, a microcontroller, and a communication module. The status display module includes a plurality of status indicator lights. The status display module is configured to receive a control signal to determine a bright/dark state of each of the status indicator lights. The microcontroller is electrically connected with the status display module. The microcontroller is configured to provide the control signal to the status display module. The communication module is electrically connected with the microcontroller. The microcontroller communicates with an external computer device through the communication module. The display device further comprises a display panel, electrically connected with the microcontroller and configured to provide a display frame on a display region, wherein the status display module is disposed below the display region. When the computer device executes a gaming program, the microcontroller receives a setting parameter of level information provided by the gaming program through the communication module. The microcontroller generates and provides the control signal to the status display module based on the setting parameter to control the bright/dark state of each of the status indicator lights, wherein the status indicator lights are a plurality of light emitting diode modules, and each of the light emitting diode modules comprises a plurality of light emitting diodes, wherein the light emitting diodes are sequentially arranged along a horizontal direction.

According to an embodiment, the display device is electrically connected with the microcontroller. A display panel is configured to provide a display frame on a display region. The status display module is disposed below the display region.

According to an embodiment, display contents in the display frame are determined based on at least one specific function of the gaming program. The bright/dark state of each of the status indicator lights is varied with the at least one specific function.

According to an embodiment, the communication module is a universal serial bus hub, and the microcontroller is electrically connected with the computer device through a universal serial bus,

According to an embodiment, the status indicator lights are a plurality of light emitting diode modules, and the light emitting diode modules respectively render lighting effects of different colors.

According to an embodiment, the number of the light emitting diode modules is five. The light emitting diode modules are sequentially arranged along a horizontal direction.

According to an embodiment, each of the light emitting diode modules includes a plurality of light emitting diodes. The light emitting diodes of each of the light emitting diode modules respectively render a lighting effect of the same color.

According to an embodiment, the number of the light emitting diodes are eight. The light emitting diodes are sequentially arranged along a horizontal direction. The light emitting diodes optionally emit light respectively based on the control signal.

According to an embodiment, the display device further includes another status display module. The another status display module is electrically connected with the microcontroller. The another status display module is configured to receive another control signal provided by the microcontroller. The status display module and the another status display module are respectively configured on opposite sides of the display device.

According to an embodiment, the external computer device further includes an on-screen display application program and a device integration program. The specific application / gaming program is linked with the on-screen display application program and the device integration application program to generate the setting parameter,

Based on the above, the display device according to the embodiments of the invention is able to render a status display function (or status indicator function) through the status indicator lights disposed on the display device. In addition, the display device according to the embodiments of the invention may communicate with the external computer device to control the bright/dark state of each of the status indicator lights based on the setting parameter provided by the specific application / gaming program executed by the external computer device. Consequently, the display device according to the embodiments of the invention is able to render a dynamically changing lighting effect indicating the status.

In order to make the aforementioned and other features and advantages of the invention more comprehensible, several embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block diagram illustrating a display device according to an embodiment of the invention.
FIG. 2 is a block diagram illustrating a display device according to another embodiment of the invention.
FIG. 3 is a schematic view illustrating a display device according to an embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

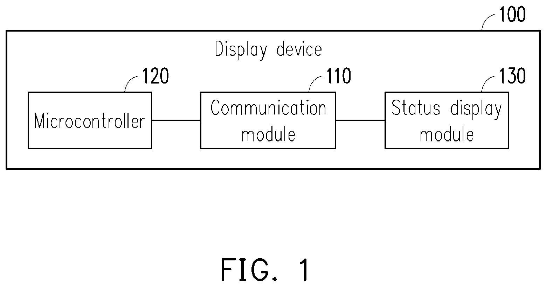

FIG. 1 is a block diagram illustrating a display device according to an embodiment of the invention. Referring to FIG. 1, a display device 100 includes a microcontroller 110, a communication module 120, and a status display module 130. The microcontroller 110 is electrically connected with the communication module 120 and the status display module 130. In the embodiment, the display device 100 may be a liquid crystal display (LCD), a field emission display (FED), an organic light emitting diode (OLED) display, an organic light emitting diode (OLED) display, and a plasma display panel (PDP), for example. However, the invention is not limited thereto, In other words, in addition to known display components and circuits, such as a display panel and a display driver, enabling the display device 100 to have a function of displaying an image frame in a display region, the display device 100 of the embodiment further includes the microcontroller 110, the communication module 120, and the status display module 130. Specifically, in the embodiment, the microcontroller 110 may receive a setting parameter provided by an external computer device, and provide a corresponding control signal to the status display module 130 to control a lighting effect of the status display module 130.

In the embodiment, the microcontroller 110 may be a central processing unit (CPU) or other programmable general-purpose or specific-purpose microprocessors, digital signal processors (DSP), programmable controllers, application specific integrated circuits (ASIC), programmable logic devices (PLD), other similar processing circuits, or a combination of the devices, for example.

In the embodiment, the display device 100 may communicate with the external computer device in a wired or wireless manner. In the embodiment, the communication module 120 may be a universal serial bus (USB) hub, for example. The display device 100 may be electrically connected with the communication module 120 through a USB, and then electrically connected with the external computer device through the communication module 120. Therefore, the display device 100 may receive data provided by the external computer device or transmit data to the external computer device. However, in an embodiment, the communication module 120 may also be a wireless communication interface, for example, and compatible with a communication standard such as Bluetooth, WiFi, or the like. Accordingly, the display device 100 may communicate with the external computer device through the communication module 120 wirelessly.

In the embodiment, the status display module 130 may, for example, include a plurality of status indicator lights, and the status indicator lights are respectively configured to provide lighting effects of different colors. In the embodiment, the status indicator lights may be light emitting modules such as light emitting diode (LED) modules or organic light emitting diode (OLED) modules. However, the invention is not limited thereto.

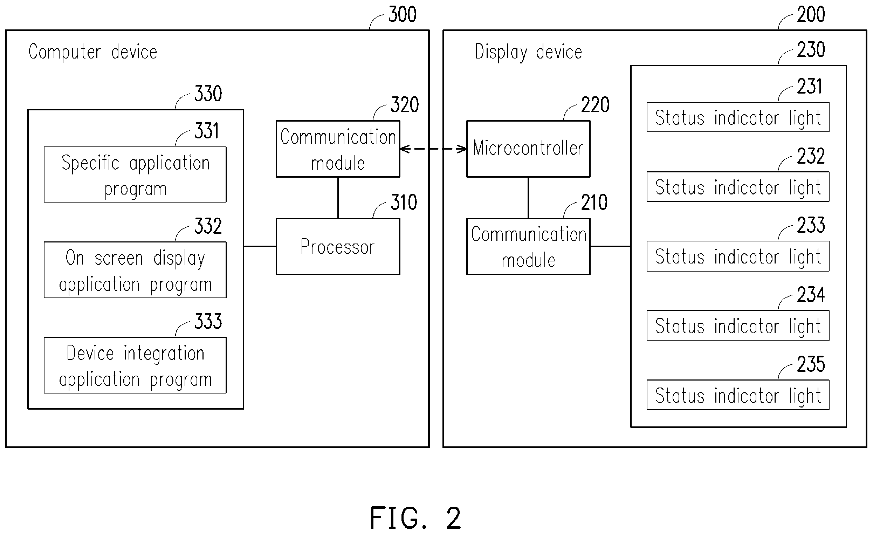

FIG. 2 is a block diagram illustrating a display device according to another embodiment of the invention. Referring to FIG. 2, a display device 200 includes a microcontroller 210, a communication module 220, and a status display module 230. The status display module 230 includes five status indicator lights 231 to 235, for example. The microcontroller 210 is electrically connected with the communication module 220 and the status display module 230. A computer device 300 includes a processor 310, a communication module 320, and a storage device 330, for example. The storage device 330 is configured to at least store a specific application / gaming program 331, an on-screen display (OSD) application program 332, and a device integration application program (e.g., a Streaming SIMD Extensions (SSE) light app) 333. In the embodiment, the computer device 330 may be various embedded or desktop electronic devices, such as a personal computer (PC), a notebook computer, a smart phone, and an ultra-mobile PC (UMPC). In the embodiment, the display device 200 may be electrically connected with the communication module 320 of the computer device 300 through the communication module 220.

In the embodiment, when the processor 310 of the computer device 300 executes the specific application / gaming program 331, the processor 310 may further execute the OSD application program 332 and the device integration application program 333. In the embodiment, the specific application / gaming program 331 may be a multimedia program or an application program of various kinds, such as a gaming program or an audio-visual playback program, compatible with the OSD application program 332 and the device integration application program 333. The invention does not intend to impose a limitation on this regard. In the embodiment, when the processor 310 of the computer device 300 executes the specific application / gaming program 331, the specific application / gaming program 331 may be linked to the OSD application program 332 and the device integration application program 333 to generate a setting parameter. In addition, the processor 310 may provide the setting parameter to the display device 200 through the communication module 320. Therefore, the microcontroller 210 of the display device 200 may receive the setting parameter through the communication module 220 and generate a control signal to the status display module 230 based on the setting parameter to control a bright/dark state of each of the status indicator lights 231 to 235. In the embodiment, the status indicator lights 231 to 235 respectively render lighting effects of different colors.

In the embodiment, the processor 310 may be a central processing unit (CPU) or other programmable general-purpose or specific purpose microprocessors, digital signal processors (DSP), programmable controllers, application specific integrated circuits (ASIC), programmable logic devices (PLD), other similar processing circuits, or a combination of the devices, for example. The storage device 330 may be a dynamic random access memory (DRAM), a flash memory, a non-volatile random access memory (NVRAM), or the like, for example. In the embodiment, the storage device 330 may be configured to at least store the modules in the respective embodiments of the invention, Besides, sufficient teaching, suggestions, and implementation details concerning the features of the respective components of the display device 200 of the embodiment may be referred to the descriptions related to the display device 100 in the embodiment of FIG. 1. Therefore, details in this respect will not be repeated in the following.

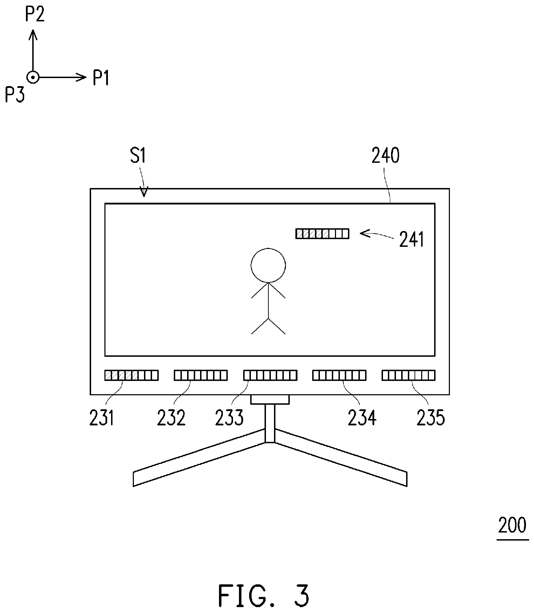

FIG. 3 is a schematic view illustrating a display device according to an embodiment of the invention. Referring to FIGs. 2 and 3, specifically, a display panel may be disposed on a display region 240 of a first surface S1 (a surface formed by a first direction P1 and a second direction P2) of the display device 200 to provide a display frame. In the embodiment, the five status indicator lights 231 to 235 of the status display module 230 may be disposed below the display region 240 and sequentially arranged in sequence along a horizontal direction (i.e., the first direction P1), for example. In the embodiment, the first direction P1, the second direction P2, and the third direction P3 are perpendicular to each other. The first direction P1 and the third direction P3 are horizontal, for example, and the second direction P2 is vertical, for example. The display device 200 is disposed on a surface formed to be parallel to a surface formed by the first direction P1 and the third direction P3. A front surface of the display device 200 is on a side facing toward the third direction P3, and a back surface of the display device 200 is on a side facing away from the third direction P3. In the embodiment, display contents in the display frame displayed on the display region 240 are determined by a specific function of the specific application / gaming program 331. In addition, the bright/dark state of each of the status indicator lights 231 to 235 is varied based on the specific function.

For example, when the computer device 300 executes a gaming program, the display frame on the display region 240 may display specific information 241 about a life level of a character, and the gaming program may be linked with at least one of the status indicator lights 231 to 235. In other words, the status indicator light 231 of the embodiment may synchronously display a proportional variation of the life level in correspondence with the specific information 241 by proportionally adjusting the bright/dark state. Therefore, when the user operates the specific application / gaming program 331, if frame information displayed on the display device 200 is too complicated or the frame changes rapidly, the user may not be able to notice all the frame information. The display device 200 of the embodiment may display corresponding information through at least one of the status indicator lights 231 to 235, so that the user is able to notice the corresponding information by observing a proportional variation of the bright/dark state of the status indicator lights 231 to 235 out of the corner of the user's eye.

In the embodiment, the status indicator lights 231 to 235 may be light emitting diode modules, for example, and each of the status indicator lights 231 to 235 may include eight light emitting diodes, for example. The light emitting diodes of each of the status indicator lights 231 to 235 may render lighting effects of the same or different colors, and may respectively optionally emit light based on the control signal provided by the controller 210. In an embodiment, the light emitting diodes are sequentially arranged along the horizontal direction (i.e., the first direction P1), but the invention is not limited thereto. It should be noted that the variation of the bright/dark state described in the embodiments of the invention refers to an effect of a proportional lighting variation where all or some of the light emitting diodes in a light emitting module may emit or not emit light based on the corresponding information, for example. However, the display device according to the embodiments of the invention is not limited to the illustration of FIG. 3. The number of the status indicator lights of the display device in the respective embodiments of the invention and positions where the status indicator lights are disposed may be designed based on different needs of use or different device requirements. For example, in an embodiment, the status indicator lights 231 to 235 may also be disposed above or on a lateral side of the display region 240.

Besides, in an embodiment, the display device 200 may further include another status display module. The another display module is electrically connected with the microcontroller 210 to receive another control signal provided by the microcontroller 210. In an embodiment, the status display module 230 and the another status display module may be disposed on opposite sides of the display device 200. For example, the status display module 230 and the another status display module may be respectively disposed on the front or rear side of the display device 200. Therefore, in an embodiment, in addition to disposing the status display module 230 on the front side of the display device 200 to provide specific information, the another status display module may be disposed on the rear side of the display device 200 to provide other lighting effects. Regarding this, in addition to providing a display frame in the display region and indicating the status through the status display module on the periphery of the display region, the display device 200 may further render various status display effects on the rear side of the display device 200. Therefore, the display device 200 is able to enrich the user experience.

In view of the foregoing, in the embodiments of the invention, a real-time status display function (or status indicator function) is rendered by linking the status indicator lights disposed on the periphery of the display region of the display device with the specific application / gaming program of the external computer device. The status indicator lights according to the embodiments of the invention may render lighting effects of different colors, and the bright/dark states of the status indicator lights may be linked with the specific function of the specific application / gaming program to be varied proportionally. Therefore, the display device according to the embodiments of the invention is able to indicate the status of important information in a real-time manner and thereby enrich the user experience.

## Claims

1. A display device (100, 200), comprising:
a status display module (130, 230), comprising a plurality of status indicator lights (231, 232, 233, 234, 235) and configured to receive a control signal to determine a bright/dark state of each of the status indicator lights (231, 232, 233, 234, 235) based on the control signal;
a microcontroller (120, 220), electrically connected with the status display module (130, 230) and configured to provide the control signal to the status display module (130, 230); and
a communication module (210), electrically connected with the microcontroller (120, 220), wherein the microcontroller (120, 220) communicates with an external computer device (300) through the communication module (210),
a display panel, electrically connected with the microcontroller (120, 220) and configured to provide a display frame on a display region (240), wherein the status display module (130, 230) is disposed below the display region (240), **characterized in that** the microcontroller (120,220) is adapted to receive, when the external computer device (300) executes a gaming program (331), a setting parameter of level information provided by the gaming program (331) through the communication module (210), and the microcontroller (120, 220) generates and provides the control signal to the status display module (130, 230) based on the setting parameter to control the bright/dark state of each of the status indicator lights (231, 232, 233, 234, 235),
wherein the status indicator lights (231, 232, 233, 234, 235) are a plurality of light emitting diode modules, and each of the light emitting diode modules comprises a plurality of light emitting diodes, wherein the light emitting diodes are sequentially arranged along a horizontal direction,
and wherein one of the status indicator lights (231,232,233,234,235) synchronously displays a proportional variation of the level information provided by the game by proportionally adjusting its bright/ dark state.

2. The display device (100, 200) as claimed in claim 1, wherein display contents in the display frame are determined based on at least one specific function of the gaming program (331), and the bright/dark state of each of the status indicator lights (231, 232, 233, 234, 235) is varied with the at least one specific function.

3. The display device (100, 200) as claimed in any one of claims 1 to 2, wherein the communication module (210) is a universal serial bus hub, and the microcontroller (120, 220) is electrically connected with the external computer device (300) through a universal serial bus.

4. The display device (100, 200) as claimed in any one of claims 1 to 3, wherein the light emitting diode modules respectively render lighting effects of different colors.

5. The display device (100, 200) as claimed in claim 4, wherein the number of the light emitting diode modules is five.

6. The display device (100, 200) as claimed in claim 4, wherein the light emitting diodes of each of the light emitting diode modules respectively render a lighting effect of the same color, wherein the light emitting diodes optionally emit light respectively based on the control signal.

7. The display device (100, 200) as claimed in claim 6, wherein the number of the light emitting diodes is eight.

8. The display device (100, 200) as claimed in any one of claims 1 to 7, further comprising:
another status display module (130, 230), electrically connected with the microcontroller (120, 220) and configured to receive another control signal provided by the microcontroller (120, 220),
wherein the status display module (130, 230) and the another status display module (130, 230) are respectively configured on opposite sides of the display device (100, 200).

9. The display device (100, 200) as claimed in any one of claims 1 to 8, wherein the setting parameter is generated by the gaming program linked with an on-screen display application program (332) and a device integration application program (333) of the external computer device (300).

## Patentansprüche

1. Anzeigevorrichtung (100, 200), umfassend:
ein Statusanzeigemodul (130, 230), das eine Vielzahl von Statusanzeigeleuchten (231, 232, 233, 234, 235) umfasst und so konfiguriert ist, dass es ein Steuersignal empfängt, um einen Hell/Dunkel-Zustand jeder der Statusanzeigeleuchten (231, 232, 233, 234, 235) auf der Grundlage des Steuersignals zu bestimmen;
einen Mikrocontroller (120, 220), der elektrisch mit dem Statusanzeigemodul (130, 230) verbunden und so konfiguriert ist, dass er das Steuersignal an das Statusanzeigemodul (130, 230) liefert; und
ein Kommunikationsmodul (210), das elektrisch mit dem Mikrocontroller (120, 220) verbunden ist, wobei der Mikrocontroller (120, 220) über das Kommunikationsmodul (210) mit einer externen Computervorrichtung (300) kommuniziert,
ein Anzeigefeld, das elektrisch mit dem Mikrocontroller (120, 220) verbunden und so konfiguriert ist, dass es einen Anzeigerahmen auf einem Anzeigebereich (240) bereitstellt, wobei das Statusanzeigemodul (130, 230) unterhalb des Anzeigebereichs (240) angeordnet ist,
**dadurch gekennzeichnet, dass** der Mikrocontroller (120, 220) so ausgelegt ist, dass er, wenn die externe Computervorrichtung (300) ein Spielprogramm (331) ausführt, einen Einstellparameter von Pegelinformationen empfängt, die von dem Spielprogramm (331) über das Kommunikationsmodul (210) bereitgestellt werden, und der Mikrocontroller (120, 220) das Steuersignal erzeugt und an das Statusanzeigemodul (130, 230) auf der Grundlage des Einstellparameters liefert, um den Hell/Dunkel-Zustand jeder der Statusanzeigeleuchten (231, 232, 233, 234, 235) zu steuern,
wobei die Statusanzeigeleuchten (231, 232, 233, 234, 235) eine Vielzahl von Leuchtdiodenmodulen sind, und jedes der Leuchtdiodenmodule eine Vielzahl von Leuchtdioden umfasst, wobei die Leuchtdioden sequentiell entlang einer horizontalen Richtung angeordnet sind.
und wobei eine der Statusanzeigeleuchten (231, 232, 233, 234, 235) synchron eine proportionale Variationsstufeninformation anzeigt, die durch das Spiel durch proportionales Einstellen seines Hell/Dunkel-Zustandes bereitgestellt wird.

2. Anzeigevorrichtung (100, 200) nach Anspruch 1, wobei der Anzeigeinhalt in dem Anzeigerahmen auf der Grundlage mindestens einer spezifischen Funktion des Spielprogramms (331) bestimmt wird und der Hell/Dunkel-Zustand jeder der Statusanzeigeleuchten (231, 232, 233, 234, 235) mit der mindestens einen spezifischen Funktion variiert wird.

3. Die Anzeigevorrichtung (100, 200) wie in einem der Ansprüche 1 bis 2 beansprucht, wobei das Kommunikationsmodul (210) ein universeller serieller Bus-Hub ist und der Mikrocontroller (120, 220) elektrisch mit der externen Computervorrichtung (300) über einen universellen seriellen Bus verbunden ist.

4. Die Anzeigevorrichtung (100, 200) nach einem der Ansprüche 1 bis 3, wobei die Leuchtdiodenmodule jeweils Beleuchtungseffekte verschiedener Farben wiedergeben.

5. Die Anzeigevorrichtung (100, 200) nach Anspruch 4, wobei die Anzahl der Leuchtdiodenmodule fünf beträgt.

6. Anzeigevorrichtung (100, 200) nach Anspruch 4, wobei die Leuchtdioden jedes der Leuchtdiodenmodule jeweils einen Beleuchtungseffekt der gleichen Farbe erzeugen, wobei die Leuchtdioden optional Licht jeweils auf der Grundlage des Steuersignals emittieren.

7. Die Anzeigevorrichtung (100, 200) nach Anspruch 6, wobei die Anzahl der Leuchtdioden acht beträgt.

8. Die Anzeigevorrichtung (100, 200) nach einem der Ansprüche 1 bis 7, weiter umfassend:
ein weiteres Statusanzeigemodul (130, 230), das elektrisch mit dem Mikrocontroller (120, 220) verbunden und so konfiguriert ist, dass es ein weiteres Steuersignal empfängt, das von dem Mikrocontroller (120, 220) bereitgestellt wird,
wobei das Statusanzeigemodul (130, 230) und das andere Statusanzeigemodul (130, 230) jeweils auf gegenüberliegenden Seiten der Anzeigevorrichtung (100, 200) konfiguriert sind.

9. Die Anzeigevorrichtung (100, 200), wie sie in einem der Ansprüche 1 bis 8 beansprucht wird, wobei der Einstellparameter durch das Spielprogramm erzeugt wird, das mit einem Bildschirmanzeige-Anwendungsprogramm (332) und einem Vorrichtungs-Integrations-Anwendungsprogramm (333) der externen Computervorrichtung (300) verbunden ist.

## Revendications

1. Un afficheur (100, 200), comprenant :
un module d'affichage d'état (130, 230), comprenant une pluralité de voyants d'état (231, 232, 233, 234, 235) et configuré pour recevoir un signal de commande afin de déterminer un état clair/foncé de chacun des voyants d'état (231, 232, 233, 234, 235) sur la base du signal de commande ;
un microcontrôleur (120, 220), connecté électriquement au module d'affichage de l'état (130, 230) et configuré pour fournir le signal de commande au module d'affichage de l'état (130, 230) ; et
un module de communication (210), connecté électriquement au microcontrôleur (120, 220), dans lequel le microcontrôleur (120, 220) communique avec un dispositif informatique externe (300) par l'intermédiaire du module de communication (210),
un panneau d'affichage, connecté électriquement au microcontrôleur (120, 220) et configuré pour fournir un cadre d'affichage sur une zone d'affichage (240), dans lequel le module d'affichage d'état (130, 230) est disposé sous la zone d'affichage (240),
**caractérisé en ce que** le microcontrôleur (120, 220) est adapté pour recevoir, lorsque le dispositif informatique externe (300) exécute un programme de jeu (331), un paramètre de réglage des informations de niveau fournies par le programme de jeu (331) par l'intermédiaire du module de communication (210), et le microcontrôleur (120, 220) génère et fournit le signal de commande au module d'affichage d'état (130, 230) sur la base du paramètre de réglage pour commander l'état clair/foncé de chacun des voyants d'état (231, 232, 233, 234, 235),
dans lequel les voyants d'état (231, 232, 233, 234, 235) sont une pluralité de modules de diodes électroluminescentes, et chacun des modules de diodes électroluminescentes comprend une pluralité de diodes électroluminescentes, dans lequel les diodes électroluminescentes sont disposées séquentiellement le long d'une direction horizontale,
et dans lequel l'un des voyants d'état (231, 232, 233, 234, 235) affiche de manière synchrone une information sur le niveau de variation proportionnelle fourni par le jeu en ajustant proportionnellement son état clair/foncé.

2. Le afficheur (100, 200) selon la revendication 1, dans lequel le contenu de l'affichage dans le cadre de l'affichage est déterminé sur la base d'au moins une fonction spécifique du programme de jeu (331), et l'état clair/foncé de chacun des voyants indicateurs d'état (231, 232, 233, 234, 235) est modifié avec la au moins une fonction spécifique.

3. Le afficheur (100, 200) tel que revendiqué dans l'une quelconque des revendications 1 à 2, dans lequel le module de communication (210) est un concentrateur de bus série universel, et le microcontrôleur (120, 220) est connecté électriquement au dispositif informatique externe (300) par l'intermédiaire d'un bus série universel.

4. Le afficheur (100, 200) selon l'une quelconque des revendications 1 à 3, dans lequel les modules de diodes électroluminescentes rendent respectivement des effets lumineux de différentes couleurs.

5. Le afficheur (100, 200) selon la revendication 4, dans lequel le nombre de modules de diodes électroluminescentes est de cinq.

6. Le afficheur (100, 200) selon la revendication 4, dans lequel les diodes électroluminescentes de chacun des modules de diodes électroluminescentes rendent respectivement un effet d'éclairage de la même couleur, dans lequel les diodes électroluminescentes émettent facultativement de la lumière respectivement sur la base du signal de commande.

7. Le afficheur (100, 200) selon la revendication 6, dans lequel le nombre de diodes électroluminescentes est de huit.

8. Le afficheur (100, 200) selon l'une quelconque des revendications 1 à 7, comprenant en outre :
un autre module d'affichage d'état (130, 230), connecté électriquement au microcontrôleur (120, 220) et configuré pour recevoir un autre signal de commande fourni par le microcontrôleur (120, 220),
dans lequel le module d'affichage de l'état (130, 230) et l'autre module d'affichage de l'état (130, 230) sont respectivement configurés sur des côtés opposés du afficheur (100, 200).

9. Le afficheur (100, 200) tel que revendiqué dans l'une quelconque des revendications 1 à 8, dans lequel le paramètre de réglage est généré par le programme de jeu lié à un programme d'application d'affichage à l'écran (332) et à un programme d'application d'intégration de dispositif (333) du dispositif informatique externe (300).
